# EUROPEAN PATENT SPECIFICATION

(11) **EP 1 425 184 B1**
(45) Date of publication and mention of the grant of the patent: **04.04.2007**
(21) Application number: 02761536.8
(22) Date of filing: 30.08.2002
(51) Int. Cl.: B41M 5/00, B41C 3/08

(54) **Process for making a thermoformed digitally printed product**
Herstellungsverfahren eines digital bedruckten thermisch-geformten Produktes
Procédé de production d'un produit thermoformé et imprimé par voie digitale

(30) Priority: 05.09.2001 US 947077
(43) Date of publication of application: 09.06.2004
(73) Proprietor: AVERY DENNISON CORPORATION, Pasadena, CA 91103 (US)
(72) Inventor: JOHNSON, John, Rick, Valparaiso, IN 46385 (US); ROEDEL, Jerry, Cedar Lake, IN 46303 (US)
(74) Representative: Müller-Boré & Partner Patentanwälte
(86) International application number: PCT/US2002/027640
(87) International publication number: WO 2003/020529

(56) References cited:
- EP-A- 0 761 449
- EP-A- 0 949 120
- DE-A- 19 943 330
- DATABASE WPI Section PQ, Week 199809 Derwent Publications Ltd., London, GB; Class P75, AN 1998-098293 XP002222459 & JP 09 326938 A (CANON KK), 16 December 1997 (1997-12-16)

## Description

### FIELD OF THE INVENTION

This invention relates to ink jet printing of color images on polymeric sheets and laminates, and more particularly to the manufacture of three-dimensionally shaped polymeric sheets and laminates with color-matched digitally printed full color ink jet images. This invention also relates to a process of making a color-matched thermoformed or molded digitally printed automotive laminate.

### BACKGROUND OF THE INVENTION

Three-dimensionally shaped polymeric sheets and laminates are commonly printed with full color decorative print patterns. The printed sheets or laminates can be bonded to an injection molded substrate to make the finished part. These products can include interior automotive parts such as dashboard parts and gauges with decorative finishes, including decorative wood grain, and other products such as cell phones, personal electronic equipment (MP3 and CD players), EMI/RFI shielding, signs, and outdoor siding panels, for example.

These products are commonly made by a gravure printing process in which color separations in individual layers are initially sent to an engraver and produced on gravure plates. Inks are produced for individual color layers, and a composite is made to duplicate the customer's color sample. When the colors are acceptable, these steps are repeated to produce production gravure cylinders. The composite is then color-matched on a gravure press, and when the color match is acceptable, the gravure cylinders print the finished pattern. The substrate can comprise a polymeric sheet printed with several passes through the gravure press to produce the various color elements of the finished design. The sheet then can be laminated to a substrate and thermoformed and/or injection molded to a finished three-dimensional shape.

Digital printing allows use of computer generated and enhanced images. This can provide substantial design and production advantages over gravure printing. Computer generated images can be stored and instantly produced from computer memory. This also allows multiple designs to be printed at the same time, whereas with gravure printing, each separate design print must be made in the multi-step process described above.

### SUMMARY OF THE INVENTION

The present invention provides a process according to present claims for making ink jet printed products such as thermoformable polymeric sheets and laminates with color-matched digitally printed full color inkjet images.

The invention comprises a process for making a thermoformable laminate which includes a flexible thermoformable polymeric sheet or film, also referred to herein as a baseweb. The baseweb is placed in an ink jet printer and a solvent-based (non-aqueous) digital printing ink is applied directly to the baseweb, in the absence of an ink receptive layer on the baseweb, to form a digitally printed decorative inkjet pattern in multiple colors with good ink adhesion in a single pass through the printer. This is followed by thermoforming and/or molding the finished printed baseweb into a three-dimensional shape. The digital printing is directly applied to the underside of a clear coat layer to form a decorative pattern on the clear coat layer in multiple colors in a single pass through the printer. The invention also comprises a process for making a color-matched thermoformable decorative laminate. The process includes producing a software-driven image of a pattern on a screen to represent a standard color print pattern, and evaluating and adjusting the standard as displayed on the screen using software-driven image-related adjustments for hue, contrast, lightness/darkness, saturation, resolution and image size, for example. A test print is then produced by the steps of applying a decorative pattern to a thermoformable polymeric sheet or film (baseweb), using a digital ink jet printer. Adjustments are made to the test print image to color-match the test print to the accepted standard as displayed on the screen. When the adjusted color-matched test print image is acceptable, an image-related output is passed to the digital ink jet printer for digitally printing on a baseweb a decorative print color-matched to the accepted on-screen standard.

Compared with gravure printing, the digital printing process of this invention speeds the color-matching processing and the process of producing multiple color images. The invention also provides high quality digitally printed images on three-dimensionally shaped parts in which the applied ink jet images have good print quality, abrasion resistance and adhesion to the substrate. The invention also provides digitally printed laminates having a protective outer layer having exterior grade long-term weatherability, durability, and optical properties such as high gloss. Printing directly on the baseweb provides substantial cost savings. Another advantage is that one can see what the product looks like immediately after it is printed. With gravure printing, on the other hand, a sample is taken off-line and laminated to a baseweb piece, which slows the color matching process.

Digitally printed images can be applied to selected areas such as, the exact patterns corresponding to the thermoformed parts, whereas with gravure printing, the entire width of the baseweb must be printed with printed scrap areas between the thermoformed parts. There can also be substantial cost saving advantages in production by eliminating the need for lengthy lacquer production and color qualifying time.

These and other aspects of the invention will be more fully understood by referring to the following detailed description and the accompanying drawings.

### BRIEF DESCRIPTION OF THE DRAWINGS

FIG. 1 is a flow chart showing a prior art process for making gravure printed products.
FIG. 2 is a schematic cross-section illustrating a digitally printed laminate with a protective topcoat.
FIG. 3 is a schematic cross-section illustrating a digitally printed laminate in which a print layer is applied directly to the backing sheet.
FIG. 4 is a schematic cross-section illustrating a digitally printed translucent laminate.
FIG. 5 is a schematic cross-section illustrating a laminate in which a digitally printed clear topcoat is overlaminated on a separate laminate comprising a clear coat/color coat/backing sheet combination.
FIG. 6 is a schematic flow diagram illustrating steps in a digital color adjustment process.
FIG. 7 is a schematic flow diagram illustrating a process for producing a digitally printed substrate.
FIG. 8 is a schematic flow diagram illustrating a digitally printed laminate produced by printing on a protective base web laminated to a backing sheet.
FIG. 9 is a schematic flow diagram illustrating a digitally printed product produced by printing directly on a clear substrate.
FIG. 10 is a schematic cross-section illustrating a laminate having a digitally printed layer with a metallized layer.
FIG. 11 is a schematic cross-section illustrating a laminate having a digitally printed layer applied to a PVC backing sheet having a pressure-sensitive adhesive layer.
FIG. 12 is a schematic cross-section illustrating a laminate having an optically clear protective coat, with a print layer, an opaque backing sheet, and an BMI/RFI shielding layer.
FIG. 13 is a schematic cross-section illustrating a laminate in which a print layer is applied between a low gloss PVDF/acrylic protective coat and a rigid PVC backing sheet.
FIG. 14 is a schematic cross-section illustrating a reverse printed clear laminate with a clear topcoat.
FIG. 15 is a schematic cross-section illustrating a thick sheet laminate with a digitally printed layer.
FIG.16 is a schematic cross-section illustrating a laminate in which a protective clear coat is applied with an inkjet printer, along with a digitally printed layer.
FIG. 17 is a schematic cross-section illustrating a digitally printed laminate comprising an in-mold film.

### DETAILED DESCRIPTION

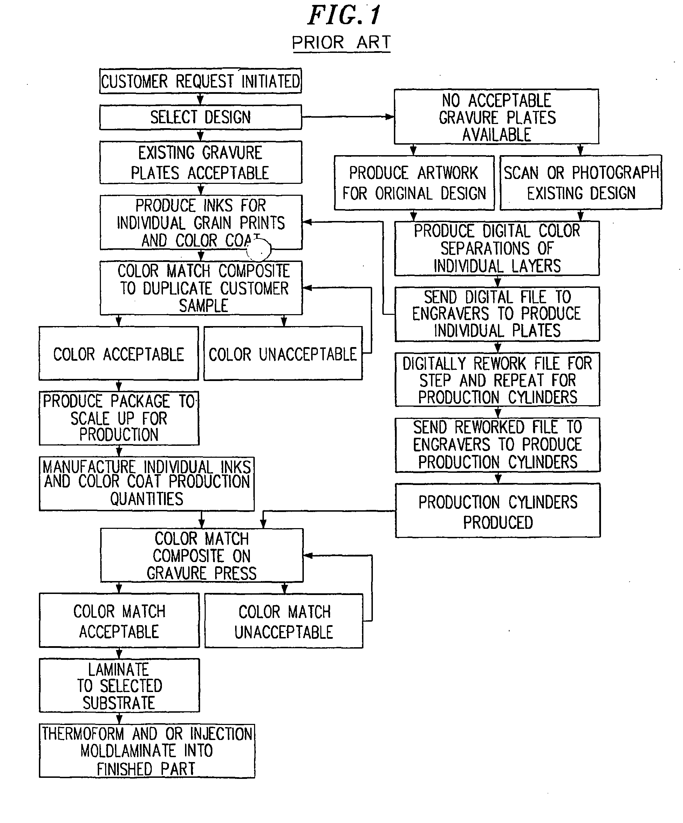

The present invention provides a process for making digitally printed products in which multiple color decorative print patterns are applied to a polymeric sheet or laminate by a digitally-controlled ink jet printer. The polymeric sheet or laminate comprises a thermoformable material in the form of a flexible film or sheet (each of which is referred to herein as a baseweb) on which a decorative image is digitally printed Digital printing of this invention allows the use of computer generated and enhanced images. The finished product is characterized by color-matched digitally printed full color inkjet images. The invention provides substantial design and production advantages over gravure printing. To that end, the invention may be more fully appreciated by initially referring to the schematic flow diagram of FIG. 1 which illustrates a typical prior art gravure printing process. According to this process, the selected design is tested for acceptable color separations using engraved gravure plates. If existing gravure plates are not available, color separations in individual layers are first sent to an engraver and produced as individual layers on individual gravure plates. Inks are produced for individual color layers and a composite is made from the gravure plates and color-matched to duplicate the customer's design sample. When a color match is acceptable these steps are repeated to produce production gravure cylinders. The composite is then color-matched on a gravure press and when the color match is acceptable the gravure cylinders print the finished pattern. If gravure plates were not initially available, digital reworking is involved in producing the production gravure cylinders. The baseweb can comprise a polymeric sheet or film printed with several passes through the gravure press to produce the various color elements of the finished design. The sheet or film then can be laminated to a substrate and thermoformed and/or injection molded to a finished three dimensional shape.

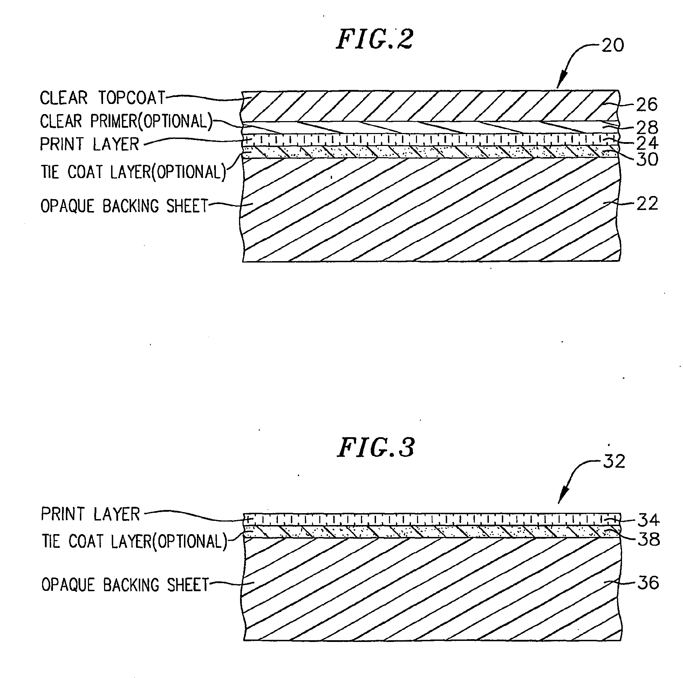

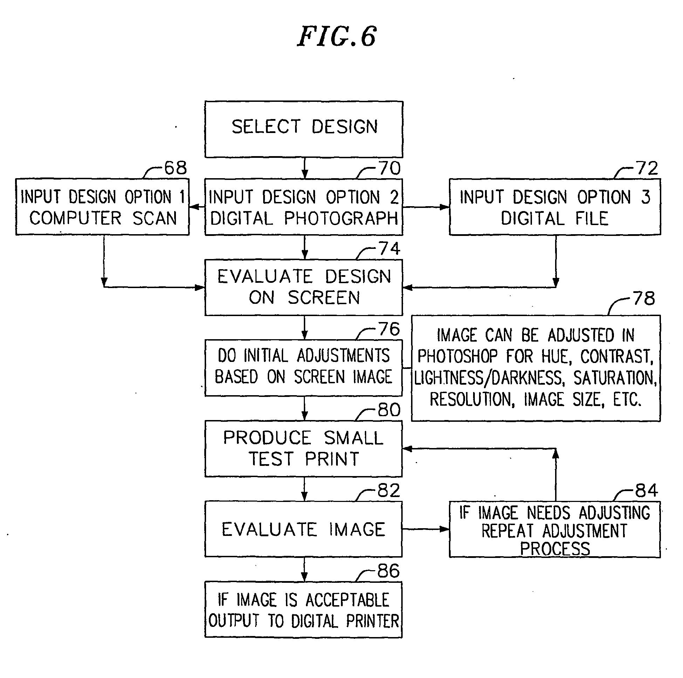

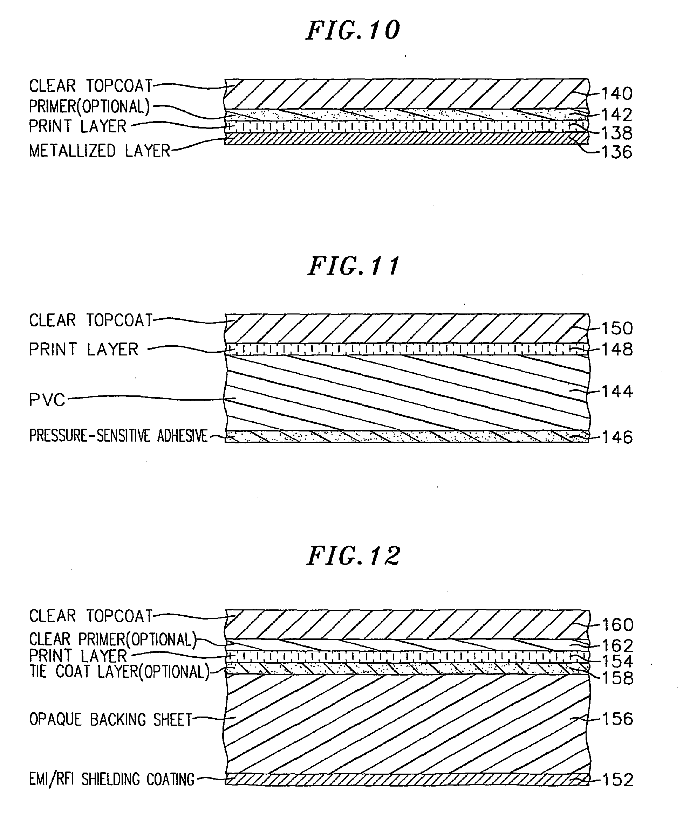

FIGS. 2-5 illustrate various constructions of digitally printed products. Other constructions are described later and illustrated in FIGS. 10-16. FIGS. 6-9 are schematic block diagrams illustrating various processing techniques for making digitally printed products.

Generally speaking, the different constructions comprise various combinations of polymeric sheets or films (basewebs) to which a print layer is applied. The print layer refers specifically to digital printing, preferably ink jet printing. In one embodiment, there are from four to six color cartridges in the digital printer. The color in each cartridge is kept constant. A software program controls how these set colors are combined to produce an image. Printing is directly applied to the polymeric baseweb as described in present claims. In one embodiment, organic solvent based (non-aqueous) digital printing ink is applied to a baseweb surface having an absence of an ink receptive layer. The digital printing inks are generally vinyl and acrylic resinous materials. The polymeric sheet or film has sufficient flexibility that it can be unwound from a supply roll, passed through the printer, and stored on a take-up roll. Machine adjustments to the digital printer can be made to adapt to printing on different polymeric baseweb materials. These machine adjustments include drying time (speed of baseweb), printing speed and heating the baseweb. A forced air or infrared dryer can be used for heating the baseweb before and after printing, to improve ink adhesion and to dry the printed ink pattern.

In a presently preferred embodiment of the invention the polymeric sheet or film (baseweb) on which the printing is applied is from 12,7 µm to 76,2 µm (0.5 to 3 mils) in thickness. The baseweb comprises a thin flexible film supported by a flexible temporary carrier sheet. The semirigid sheets are generally 254 µm to 1016 µm (10 to 40 mils) in thickness. Opaque polymeric sheets or films can include ABS, TPO, polycarbonate, acrylic and urethane. Optically clear sheets or films can include polycarbonate, PETG, acrylic and urethane. Thin polymeric films used as a baseweb can include PVC, PVDF/acrylic and urethane resins. These films are from 12,7 µm to 76,2 µm (0.5 to three mils) in thickness. These films are supported by a temporary carrier sheet, such as PET, during printing.

Some digitally printed products may include a protective topcoat having weatherability and durability properties sufficient for protecting the underlying construction. The protective topcoat is a weatherable, exterior grade durable, optically clear polymeric material; which is also preferably thermoformable. Presentlypreferredmaterials comprise PVDF/acrylic, PVC, urethane and acrylic resins. The PVDF/acrylic topcoat preferably has a 63/37 ratio of solids content and is available under the designation AVLOY from Avery Dennison Corporation.

A clear primer may be necessary to adequately bond the print layer to various topcoats. Acrylic resins are commonly used for the primer coat. A tie coat layer also may be applied to a polymeric sheet or film to bond the print layer to the sheet or film. Tie coat materials can include acrylic resins for ABS, and a two-layered tie coat for TPO which includes a CPO (chlorinated polyolefin) that contacts the TPO and an acrylic resin that contacts the print layer. As described below, the print layer is applied to a transparent protective topcoat layer.

Printing inks useful in this invention include (1) 3M Scotchcal Piezo Ink Jet Ink Series 3700, (2) Roland FPG Series and CR-MR2 Series cartridges, and (3) Inkware (division of Vutek) printing ink. Ink jet printers useful for carrying out the invention include (1) Scitex "Novo Green," (2) Vutek "Ultra Vu 3360" and "Ultra Vu 2360 SC,"(3) Roland "Hi-Fi Jet Pro," and (4) "Arizona" printer from Raster Graphics.

The Roland printer uses the Roland printing inks and the 3M printing inks. The Vutek printer uses the Inkware inks. The Scitex printer uses its own brand of inks. Organic solvent-based inks with pigments have produced superior weathering results. Failures were produced under similar conditions with water-based inks that contained dyes.

Referring now to the various constructions of digitally printed products which illustrate principles of this invention, FIG. 2 illustrates a laminate 20 which includes a semirigid thermoformable polymeric backing sheet 22 having a protected print layer 24. A semirigid backing sheet according to this invention has a thickness from 254 to 1016 µm (10 to 40 mils). A baseweb in this thickness range is thermoformable to a desired three-dimensional shape. The print layer is applied directly to the underside of an optically clear topcoat 26 which is then laminated to the backing sheet. When printing the topcoat layer, a temporary carrier film is used to support the thinner topcoat layer which may have a thickness from 12,7 to 76,2 µm (0.5 to three mils). An optional optically clear primer 28 may be used to bond the print layer to the topcoat; or an optional tie coat layer 30 may be applied to the backing sheet to bond the print layer to the backing sheet.

FIG. 3 illustrates a digitally printed laminate 32 without a protective topcoat. In this embodiment which is not according to present claims, a print layer 34 is applied directly to a semirigid thermoformable opaque polymeric backing sheet 36. The print layer, according to this invention, can be applied directly to the backing sheet in the absence of a separate ink receptive layer on the backing sheet. In some instances the ink layer has sufficient adhesion to the backing sheet and sufficient abrasion resistance to produce a commercial product in the absence of an ink receptive layer or a protective topcoat. However, if the backing sheet comprises TPO, an optional tie coat layer 38 may be used for bonding the print layer to the backing sheet. This, construction may be useful for cell phones, MP3 and CD players and other personal electronic equipment. Performance requirements are typically lower for these types of products compared to interior or exterior automotive parts for which the construction of FIG. 2 would be more useful.

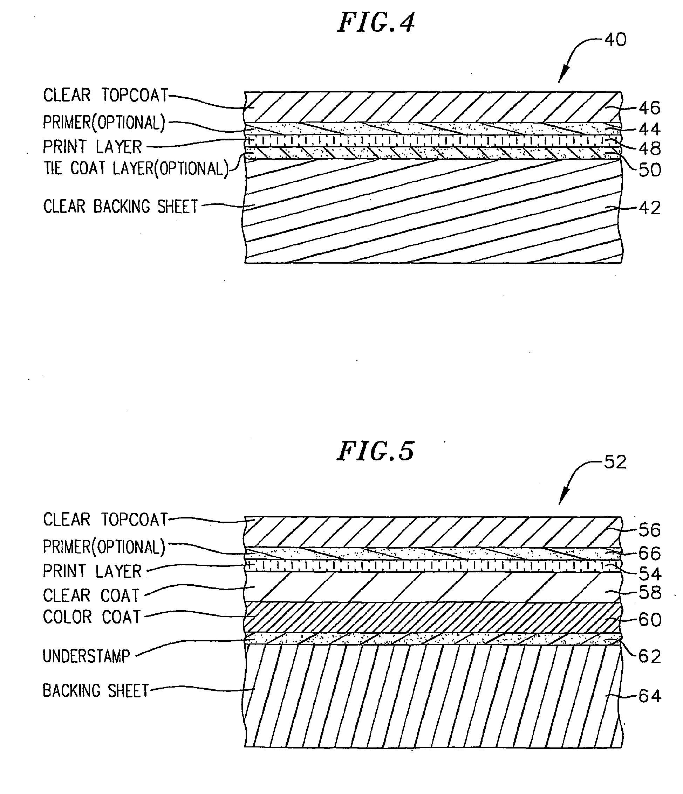

FIG. 4 illustrates a construction similar to FIG. 2 in which a translucent laminate 40 comprises an optically clear semirigid polymeric backing sheet 42 having a print layer 48 protected by a clear topcoat 46. An optional primer coat 44 and an optional tie coat 50 can be used in a manner similar to the FIG. 2 construction. The print layer is sufficiently translucent to allow visible light through the laminate. For lower performance requirements, the laminate of FIG. 4 can be made without the protective topcoat.

FIG. 5 illustrates a clear overlaminate 52 having a print layer 54. This construction includes a clear topcoat 56 which has been printed with the print layer 54. The topcoat is supported by a temporary carrier during printing and is laminated to a preexisting laminate which includes an optically clear coat 58, an underlying pigmented color coat 60, and an adhesive layer or size coat (understamp) 62 on a semirigid polymeric backing sheet 64. The clear topcoat may include an optional primer coat 66 for bonding to the print layer.

The embodiments of FIGS. 2 through 5 provide digitally printed laminates which are thermoformable to a desired shape while substantially retaining their initial optical characteristics (gloss, DOI), print quality and adhesion of the print layer to the baseweb.

FIGS. 6 through 9 illustrate various processing steps in color-matching and producing the digitally printed laminates according to this invention. FIG. 6 illustrates a digital color adjustment process which involves scanning an image, making color adjustments, and producing small test prints for use in evaluating the image. The process starts with selecting a design, preferably one made by a multiple color process such as a common four-color process, although ink cartridges greater in number than four can be used. The selected design originates from several input design options which include a computer scan 68, a digital photograph 70 or a digital file 72. A software-driven image of a pattern is displayed on a computer screen 74 to represent a standard color print pattern. The standard is evaluated and adjusted on the screen using software-driven image-related adjustments for hue, contrast, lightness/darkness, saturation, resolution, image size, etc. These steps are illustrated at 76 and 78. The software typically assumes that the color layers are applied to a white print background. A small test print 80 is produced using a software program such as Photoshop. The test print is made by the steps of applying a decorative pattern to a polymeric baseweb using digital printing ink applied by a digital ink jet printer. Adjustments are made to the test print image to color-match the test print to the accepted standard as displayed on the screen. The standard as displayed on the screen is not adjusted once the color-matching process starts. When the adjusted, color-matched test print image output from the printer is acceptable, an image-related output is passed to the digital ink jet printer for digitally printing on the baseweb to produce a decorative print color-matched to the accepted on-screen standard. The image evaluation step is illustrated at 82, the adjustment process at 84, and the output of the acceptable image to the digital printer is illustrated at 86.

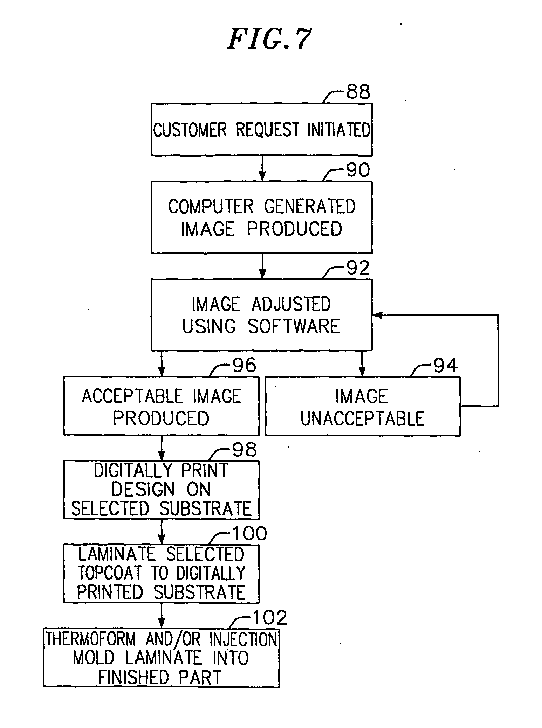

FIG. 7 is a flow diagram illustrating a process for making digitally printed products produced by printing directly on a substrate. According to this process, a customer request 88 is initiated, a computer-generated image is produced 90, and the image is adjusted on a computer screen 92 using a software-driven computer program 92. Unacceptable images are adjusted at 94 using the software for making the adjustments until an acceptable image 96 is produced on the computer screen. The acceptable design is digitally printed on a selected substrate 98 and a selected topcoat is laminated to the digitally printed substrate 100. The resulting laminate is then thermoformed and/or injection molded into the finished part 102.

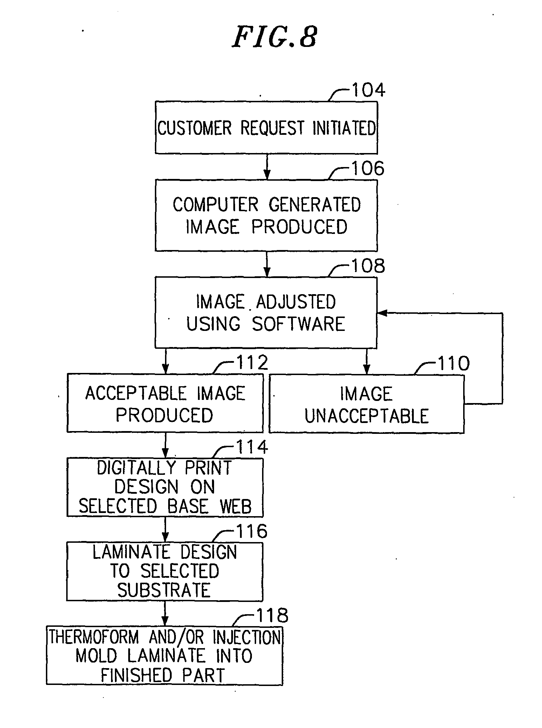

FIG. 8 is a flow chart illustrating a digitally printed product produced by printing on a protected baseweb which is laminated to the backing sheet. This process includes initiating a customer request 104, computer-generating the image 106, adjusting the image using a software-driven computer program 108, adjusting images which are unacceptable on the computer screen to make image adjustments 110, and when an acceptable image is produced at 112, the acceptable design is digitally printed on a selected baseweb 114. The design is laminated to a selected substrate 116, and the laminate is then thermoformed and/or injection molded into the finished part 118.

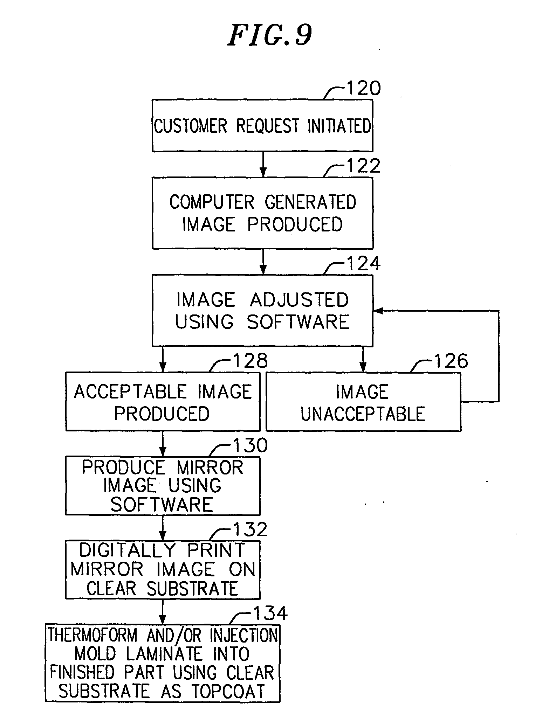

FIG. 9 is a flow chart illustrating a process for making a digitally printed product produced by printing directly on a clear substrate. In this process a customer request is initiated 120, a computer generated image 122 is produced, the image is adjusted using the software program 124, and unacceptable images on the computer screen are adjusted using the software 126 until an acceptable image 128 is produced. A mirror image is produced using software 130 and the mirror image is digitally printed on a clear substrate 132. The finished laminate is then thermoformed and/or injection molded into a finished part 134 using the clear substrate as a topcoat.

FIG. 10 illustrates a digitally printed laminate which includes a metallized layer 136. A print layer 138 is printed on the underside of a clear topcoat 140 supported by a temporary carrier during printing. An optional primer coat 142 may be used for bonding the print layer to the clear coat. The metallized layer is applied after printing. The resulting product can be later laminated to a backing sheet. The metallized layer can be vacuum metallized or contain an effect pigment such as high aspect ratio metal flakes.

FIG. 11 illustrates a digitally printed laminate which includes a PVC backing sheet 144 having a pressure-sensitive adhesive layer 146. A print layer 148 is printed directly on the PVC layer. The topcoat is then laminated to the printed side of the PVC sheet on the side opposite from the pressure-sensitive adhesive layer.

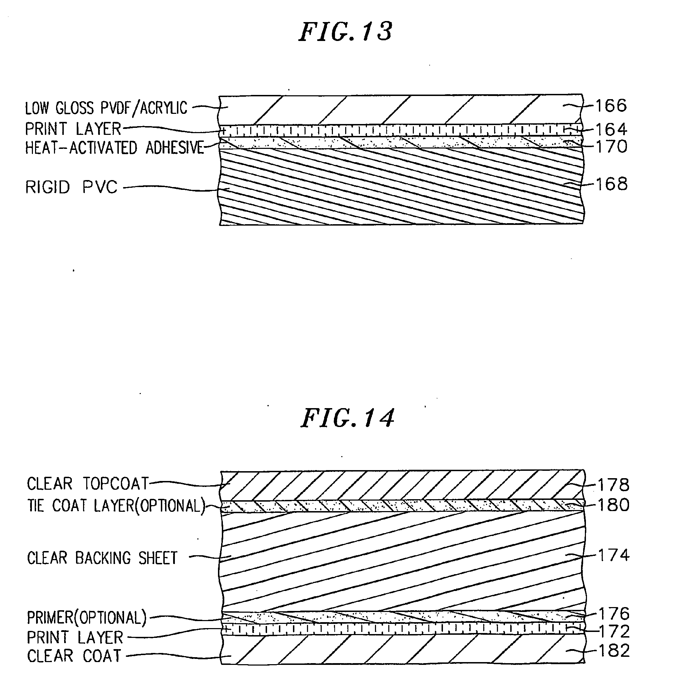

FIG. 12 illustrates a digitally printed laminate which includes an EMI/RFI shielding layer 152. This construction includes a print layer 154 which is printed directly on an opaque backing sheet 156, although the print layer can optionally be printed on a tie coat layer 158 for bonding it to the backing sheet. A clear topcoat 160 cast on a temporary carrier is overlaminated to the print layer side of the backing sheet. A clear primer 162 can be optionally used for bonding to the print layer. The EMI/RFI coating can be applied digitally, but also can be applied by gravure or reverse-roll coating. In an alternative embodiment, the EMI/RFI shielding coating can be applied to a laminate similar to that shown in FIG. 12, in the absence of the clear topcoat layer.

FIG. 13 illustrates a digitally printed low-gloss laminate which can be used for outdoor siding panels, for example. In this construction, a print layer 164 is applied to a low-gloss protective outer coat 166 which is supported on a temporary carrier (not shown) during the printing process. The print layer is applied to a rigid PVC backing sheet 168 with a heat-activated adhesive 170 following the print step.

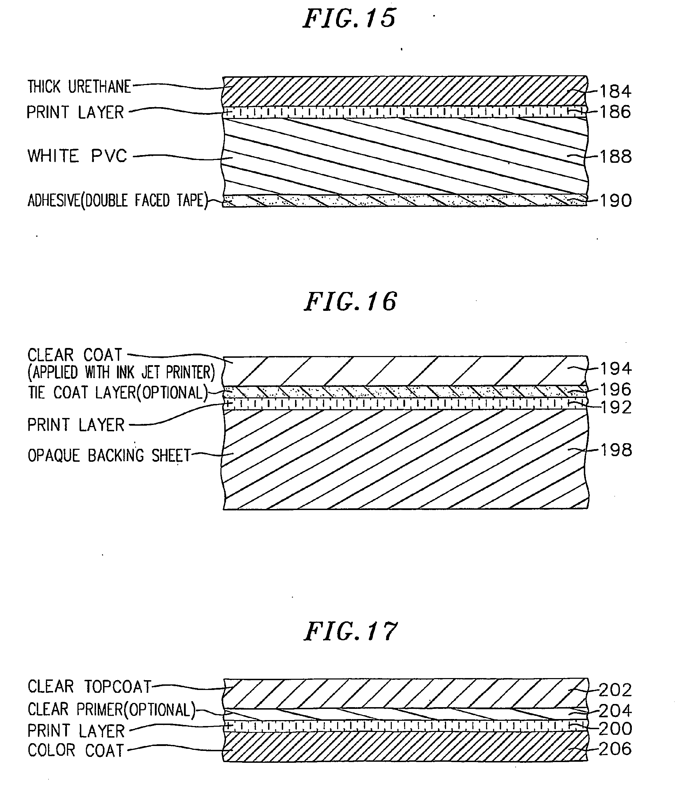

FIG. 14 illustrates a digitally printed laminate in which a print layer 172 is reverse-printed on a clear backing sheet 174. This construction may include an optional primer coat 176 for bonding the print layer to the clear backing sheet. This construction also can include a clear topcoat 178 and an optional tie coat 180 for bonding to the backing sheet on a side opposite from the print layer. The clear topcoat may be needed to protect the clear backing sheet. A protective coating 182 may be optionally used for injection cladding applications to protect the reverse-printed layer. An alternative embodiment of the FIG. 14 structure can include the reverse-printed clear laminate without the clear topcoat layer 178.

FIG. 15 illustrates a digitally printed laminate having a thick, transparent topcoat 184. A print layer 186 is applied to a polymeric backing sheet 188 such as a white PVC sheet. The outer clear coat can be a thick urethane (approximately 1016 µm (40 mils)) coat on the print layer. The urethane is a two-component system and is usually poured due to its thickness. The thick urethane layer produces a superior depth of image. The construction also can include an adhesive layer 190 such as a double-faced tape.

FIG. 16 illustrates a digitally printed laminate in which a protective clear coat 194 is applied with an ink jet printer. This construction includes an opaque polymeric backing sheet 198 and a print layer 192 applied either directly to the backing sheet or applied using a tie coat layer 196 for bonding the print layer to the backing sheet.

The embodiments illustrated herein can alternatively include clear topcoat layers which are either applied by the digital ink jet printer, or overlaminated, or applied by other methods of topcoat application such as roll coating or screen printing.

FIG. 17 illustrates a laminate which comprises an in-mold film which includes a print layer 200 printed on the underside of a clear topcoat layer 202 supported by a temporary carrier. An optional clear primer coat 204 bonds the print layer to the underside of the clear topcoat. Color coat layers 206 are then applied such as by solvent casting to the print layer. The laminate can be placed in an injection mold and the mold closed, and the resin from the molding material is injected behind the color coat layers to form a substrate. The mold is then opened, and a protective polyester carrier (not shown) which is on the clear topcoat is removed. The color coat layers provide extra opacity and provide protection for the print layer during the injection molding cycle.

### EXAMPLE 1

This example (and Examples 2 to 4) describe digital printing on a baseweb comprising a thin polymeric film supported by a temporary carrier and subsequently laminating the baseweb to an ABS backing sheet. A roll of 25,4 µm (1.0 mil) transparent PVC film, supported by a 25.4 µm (1.0 mil) high-gloss PET temporary carrier, was placed in an ink jet printer. Images were printed directly on the surface of the film, in the absence of an ink receptive layer on the baseweb. The film was heated to 49°C (120 deg. F) immediately before contact with the print head. The laminates and films of this invention are pre-heated prior to printing for improved ink adhesion. As presently understood 49°C (120°F) is the minimum temperature needed for good adhesion. Several images of different colors were printed side-by-side on the PVC film. These images had previously been adjusted using software that changes such print quality factors as hue, contrast, lightness/darkness, saturation, resolution, and image size.

The ink jet printer was the Vutek 3360. The printed ink was from the Inkware line of organic solvent-based inks. The Vutek 3360 ink jet printer had a resolution of 360 dpi (dots per inch).

After the PVC film exited the print head, the film was heated in-line with an infrared heater. This again raised the film temperature to 49°C (120 deg. F), which facilitated solvent drying of the printed inks.

The film was printed at the rate of approximately 200 square feet per minute.

After the film was removed from the printer, it was tested for retained solvent. The retained solvent was 8.4%, which is comparable to a gravure printed sample of PVC film.

The printed film was then heat and pressure laminated to a 508 µm (20 mil) ABS backing sheet. The laminating drum pressure was 80 psi, the line speed was 25 fpm, and the drum temperature was 400 deg. F. The PET carrier was removed during the laminating step.

After laminating, the sheet was thermoformed to a three-dimensional shape at a sheet temperature of 166°C (330 deg. F). The gloss, color and DOI of the thermoformed sheet were visually comparable to a gravure printed product.

The thermoformed piece was trimmed, and placed in an injection mold, where an ABS substrate material was molded to the back of the laminate sheet.

The resulting injection molded part was tested in a Xenon Weatherometer. The test spec. used was SAE J1885. After 500 and 1240 kiloJoules exposure, the sample had retained its original gloss and DOI. (Gloss retention is considered comparable if at least 70% retention is produced for all accelerated weathering samples.) The color print quality of the resulting laminate was judged to be comparable to a gravure printed laminate.

In terms of gloss readings, this example (and Examples 2, 3 and 6 to 9, to follow) generally produced minimum gloss readings of 50 gloss units (measured on a 60 degree meter) for the high-gloss basewebs.

### EXAMPLE 2

A roll of 17,8 µm (0.7 mil) transparent urethane film, supported by a 25,4 µm (1.0 mil) high-gloss PET temporary carrier, was placed in an ink jet printer. The same printer, printing inks, printing rate, resolution, and images were used as in Example 1. The urethane film did not have an ink receptive layer. The urethane film was heated to 71°C (160 deg. F) immediately before contact with the print head. The higher film pre-heat temperature (as compared to Example 1) was found to give a better print appearance for the urethane.

The ink jet images were printed directly onto the film surface, and the film was again heated in-line with an infrared heater, to a film temperature of 49°C (120 deg. F), for solvent drying the printing inks.

After the film was removed from the printer, it was tested for retained solvent. The retained solvent was 8.8%, which is comparable to a gravure printed sample of urethane.

The same laminating, thermoforming, ' and injection molding steps were used as in Example 1.

The resulting injection molded part was tested in the Xenon Weatherometer, using the SAE J1885 test spec. After 500 and 1240 kiloJoules exposure, the sample had retained its original gloss and DOI.

### EXAMPLE 3

A roll of 1.8 mil transparent PVDF/acrylic film, supported by a 2.0 mil high-gloss PET temporary carrier, was placed in an ink jet printer. The same printer, printing inks, printing rate, film pre-heat temperature, infrared heating, resolution, and images were used as in Example 2. The film did not have an ink receptive layer.

After the film was removed from the printer, it was tested for retained solvent. The retained solvent was 2.9%, which is comparable to a gravure printed sample of PVDF/acrylic film.

The same laminating, thermoforming, and injection molding steps were used, as in Examples 1 and 2.

The resulting injection molded part was tested in the Xenon Weatherometer, using the SAE J1885 test spec. After 500 and 1240 kiloJoules exposure, the sample had retained its original gloss and DOI.

In addition, thermoformed (but not injection molded) samples were subjected to the following tests:
2000 hours QUV (ASTM G53 spec.)
2000 hours Xenon Weatherometer (SAE J1960 spec.)
500 hours Carbon Arc Weatherometer
72 hours water immersion at 70 deg. C

At the conclusion of the water immersion test, the General Motors tape test GM 9071 was performed, and the sample passed. All of the samples in the accelerated weathering tests retained their original gloss and DOI.

### EXAMPLE 4

A roll of 17,8 µm (0.7 mil) translucent, low-gloss urethane film, supported by a matte 25,4 µm (1.0 mil) PET temporary carrier, was placed in an ink jet printer. The presence of a filler (fine particulate silica for example) in the urethane film acts as an agent to lower its gloss. The low-gloss film has a 60-degree gloss below about 10 gloss units. The same printer, inks, printing rate, film pre-heat temperature, infrared heating, resolution, and images were used as in Examples 2 and 3.

After the film was removed from the printer, it was tested for retained solvent. The retained solvent was 10.7%, which is comparable to a gravure printed sample of low-gloss urethane film.

The same laminating, thermoforming, and injection molding steps were used, as in Examples 1, 2 and 3.

The resulting injection molded part was tested in the Xenon Weatherometer, using the SAE J1885 test spec. After 500 and 1240 kiloJoules exposure, the sample was close to its original gloss and DOI. For the 500 kJ Xenon test, initial 60 degree gloss measured 8.1 gloss units; final 60 degree gloss measured 6.0 gloss units.

### EXAMPLE 5 (Reference)

This example describes digital printing directly on an ABS backing sheet. A roll of semirigid 254 µm (10 mil) opaque grey ABS sheet was placed in an ink jet printer. The same printer, printing inks, printing rate, resolution, infrared heating, and images were used as in Example 1. The ABS sheet did not have an ink receptive layer.

After the ABS sheet was removed from the printer, it was tape tested for ink adhesion. The test used was General Motors spec. GM 9071. No ink was removed during this test.

The printed ABS sheet was then thermoformed, using the same conditions as in Example 1.

After thermoforming, the GM 9071 test was again performed. The sample passed with no ink removal.

### EXAMPLE 6

This example describes printing directly on a transparent film. A roll of 45,7 µm (1.8 mil) transparent PVDF / acrylic film, supported by a 50,8 µm (2.0 mil) high-gloss PET temporary carrier, was placed in an ink jet printer. The same printer, inks, printing rate, film pre-heat temperature, infrared heating, resolution, and images were used as in Example 3.

The resulting film had the same retained solvent level as in Example 3.

The printed PVDF / acrylic film was laminated to a sheet of transparent 20 mil PETG. The resulting product had a translucent appearance, allowing a substantial amount of visible light through the laminate.

The laminating and thermoforming conditions were the same as in the previous Examples. The sample was not injection molded.

The resulting thermoformed part was tested in the QLTV ultraviolet condensation tester for 2800 hours. The test method used was ASTM G53. After the 2800 hours exposure, the sample had retained its original gloss, color, and DOI.

### EXAMPLE 7

This example (and Example 8) describes use of different ink jet printers. A roll of 45,7 µm (1.8 mil) transparent PVDF / acrylic film, supported by a 50,18 µm (2.0 mil) high-gloss PET temporary carrier, was placed in an ink jet printer. The printer used this time was the Arizona, manufactured by Raster Graphics. Several images of different colors were printed side-by-side on the film The resolution of these images was 300 dpi. The inks used were of the 3M Scotchcal Piezo Ink Jet Series 3700.

The film was printed at the rate of approximately 90 square feet per minute. Printing was directly onto the film surface, in the absence of an ink receptive layer.

The printed film was then laminated, thermoformed, and injection molded in the same manner as in Examples 1 through 4.

The resulting injection molded part was tested in the QUV ultraviolet condensation tester for 2800 hours. The test method used was ASTM G53. After the 2800 hour exposure, the sample had retained its original gloss, color, and DOI.

### EXAMPLE 8

A roll of 25,4 µm (1.0 mil) transparent PVC film, supported by a 25,4 µm (1.0 mil) high-gloss PET temporary carrier, was placed in a Roland Solvent Jet ink jet printer. Several images of different colors were printed side-by-side on the film. The resolution of these images was 1440 dpi. The inks used were of the Roland FPG series, printed with the CR-MR2 cartridges.

The film was printed at the rate of approximately 16 square feet per minute, and printing was directly onto the film surfaces.

The printed film was then laminated, thermoformed, and injection molded in the same manner as in Examples 1 through 4. Because of the higher resolution, these samples were judged to be superior in quality to gravure printed samples.

### EXAMPLE 9

This example describes printing on a clear baseweb followed by laminating to a TPO backing sheet. A roll of 45,7 µm (1.8 mil) transparent PVDF/acrylic film, supported by a 50,8 µm (2.0 mil) high-gloss PET temporary carrier, was processed with the same printing steps, and the same processing conditions, as in Example 3.

The printed film was then heat and pressure laminated to a white 20 mil TPO sheet. This TPO sheet had previously been laminated with a CPO/acrylic two-layer coating for improved adhesion. The printed side was laminated to the acrylic side of this two layer coating. The laminating drum pressure was 80 psi, the line speed was 25 fpm, and the drum temperature was 193,3°C (380 deg. F).

After laminating, the sheet was thermoformed at a sheet temperature of 160°C (320 deg. F). The gloss and DOI of the thermoformed sheet were comparable to a gravure printed product.

The thermoformed piece was trimmed, and placed in an injection mold, where a TPO substrate material was molded to the back of the laminate sheet.

The resulting injection molded part was tested in the Xenon Weatherometer. The test spec. used was SAE J1885. After 500 and 1240 kiloJoules exposure, the sample had retained its original gloss and DOI.

### EXAMPLE 10 (Reference)

This example describes digital printing on a TPO backing sheet. A roll of 508 µm (20 mil) opaque black TPO sheet was placed in an ink jet printer. This TPO sheet had previously been laminated with a CPO / acrylic two-layer coating for improved adhesion. The acrylic part of the two-layer coating was printed with the inks. The same printer, inks, printing rate, resolution, infrared heating, and images were used as in Example 1.

After the TPO sheet was removed from the printer it was tape tested for ink adhesion. The test used was GM9071. No ink was removed during this test.

The printed TPO sheet was then thermoformed, using the same conditions as in Example 9.

After thermoforming, the GM9071 test was again performed. The sample passed, with no ink removal.

### EXAMPLE 11 (Reference)

A roll of 508 µm 20 mil opaque brown ABS sheet was placed in an ink jet printer. The same printer, inks, printing rate, resolution, infrared heating, and images were used, as in Example 1. Printing was directly onto the surface of the ABS sheet.

The ABS. sheet was then removed from the printer. A piece of transparent 45,7 µm (1.8 mil) PVDF/acrylic film, supported by a 50,8 µm (2.0 mil) high-gloss PET temporary carrier, was laminated to the printed side. The laminating pressure was 80 psi, the line speed was 25 fpm, and the laminating drum temperature was 204,4°C (400 deg. F).

The laminate was then thermoformed and injection clad, using the same conditions of Example 1.

The resulting injection molded part was tested in the Xenon Weatherometer, using the SAE J1885 spec. After 500 and 1240 kiloJoules exposure, the sample had substantially retained its original gloss, color, and DOI. The appearance of this part was judged to be equal to the sample produced in Example 3. For the 1240 kJ Xenon test, initial 60 degree gloss measured 79.6; final 60 degree gloss measured 59.3.

### EXAMPLE 12 (Reference)

A roll of 508 µm (20 mil) opaque black TPO sheet was placed in an inkjet printer. This TPO sheet had previously been laminated with a CPO/acrylic two-layer coating for improved adhesion. The acrylic part of the two-layer coating was printed with the inks. The same printer, inks, printing rate, resolution, infrared heating, and images were used, as in Example 1.

The TPO sheet was then removed from the printer. A piece of 45,7 µm (1.8 mil) PVDF/acrylic film, supported by a 50,8 µm by a (2.0 mil) high-gloss PET temporary carrier, was laminated to the printed side. The laminating pressure was 80 psi, the line speed was 25 fpm, and the laminating drum temperature was 193,3°C (380 deg. F).

The laminate was then thermoformed and injection clad, using the same conditions of Example 9.

The resulting injection molded part was tested in the Xenon Weatherometer, using the SAE J1885 spec. After 500 and 1240 kilo Joules exposure, the sample had retained its original gloss, color, and DOI. The appearance of this part was judged to be' equal to the sample produced in Example 9. For the 1240 kJ Xenon test initial 60 degree gloss measured 76.2; final 60 degree gloss measured 67.8.

### EXAMPLE 13 (Reference)

A roll of 50.8 µm (20 mil) clear PETG sheet was placed in an ink jet printer. The same printer, printing inks, printing rate, resolution, infrared heating, and images were used, as in Example 1. Printing was directly onto the PETG sheet, in the absence of an ink receptive layer.

The printed PETG sheet was thermoformed at a sheet temperature of 148,9°C (300 deg. F). The resulting thermoformed piece had gloss and DOI comparable to the (high-gloss baseweb) samples of Examples 1, 2, and 3. The PETG maintained its transparency after thermoforming. Due to the translucency of the ink jet print, the thermoformed piece had some visible light transmission.

### EXAMPLE 14 (Reference)

A roll of 76,2 µm (3 mil) opaque adhesive-backed PVC film was placed in an ink jet printer. Printing was directly onto the surface of the film. The PVC is commercially available from the Avery-Dennison Corp., and has the product number MPI 1005. The same printer, inks, printing rate, and resolution were used, as in Example 7. The PVC film was supported by a temporary carrier. The film was not pre-heated.

The resulting film was tested for ink adhesion, using the GM 9071 spec. No ink was removed during this test.

The film was then placed on a vacuum table. A two-component urethane, commercially available as Chem-Dec 829, was poured on the ink jet printed pattern, to a depth of 1016 µm (40 mils). The urethane was allowed to dry at room temperature for 24 hours, at which time it was considered fully cured.

The resulting product had a 20 deg. gloss of 60 and a DOI of 90. These readings were much higher than the other Examples, due to the greater thickness and clarity of the urethane.

## Claims

1. A process for making a thermoformed or molded digitally printed composite laminate comprising supporting a flexible and thermoformable optically transparent polymeric baseweb on a temporary carrier film, the baseweb having a thickness from 12,7 µm to 76,2 µm (0.5 to 3 mils), placing the supported baseweb in an ink jet printer having a software-driven digitally controlled print head having image-related adjustments for printing a decorative image or pattern in a multiple color format, transporting the supported baseweb through the ink jet printer under the control of the print head controller for applying a multiple color decorative ink jet image or pattern to the baseweb, the baseweb transported through the printer so the print head applies said image or pattern in digitally controlled multiple ink jet layers and at a digitally controlled print speed in a single pass through the printer, the ink jet image or pattern applied to the baseweb by digital printing inks controlled by the print head controller, laminating the printed side of the baseweb to a semi-rigid polymeric thermoformable backing sheet and removing the temporary carrier to form the digitally printed composite laminate in which the transparent baseweb forms a protective outer layer for the image or pattern printed on the baseweb, and in which the digitally printed composite laminate is thereafter thermoformed or molded to said three-dimensional shape to form a finished shaped laminate with the digitally printed image or pattern visible through the baseweb.

2. The process according to claim 1 including pre-heating the baseweb and maintaining the baseweb at a temperature in excess of 49°C 120°F during the printing step, said temperature sufficient to improve ink adhesion compared to printing at ambient temperature, and including maintaining the baseweb temperature in excess of 49°C 120°F, following the printing step, to solvent dry the ink.

3. The process according to claim 1 or 2 in which the printer applies the ink layers directly to the surface of the baseweb in the absence of an ink receptive layer on the baseweb.

4. The process according to claim 1 or 2 in which the thermoformed baseweb passes the GM 9071 ink adhesion test, in which the thermoformed or molded baseweb, when tested according to the SAE J1885 Xenon Weatherometer test, substantially retains its original gloss, and in which the thermoformed or molded baseweb, when tested according to the ASTM G53 QUV accelerated weather test, substantially retains its original gloss.

5. The process according to any one of claims 1 to 4 in which the protective outer layer formed by the baseweb has a 60 degree gloss level in excess of about 50 gloss units.

6. A process for making a color-matched thermoformed or molded digitally printed automotive composite laminate comprising supporting a flexible and thermoformable optically transparent polymeric baseweb on a temporary carrier film, the baseweb having a thickness from 12,7 µm to 76,2 µm (0.5 to 3 mils), placing the supported baseweb in an ink jet printer having a software-driven digitally controlled print head having image-related adjustments for printing a decorative image or pattern in a multiple color format representing an automotive color standard to be matched, transporting the supported baseweb through the ink jet printer under the control of the print head controller for applying a multiple color decorative ink jet image or pattern to the baseweb, the baseweb transported through the printer so the print head applies said image or pattern in digitally controlled multiple ink jet layers and at a digitally controlled print speed in a single pass through the printer, the ink jet image or pattern applied to the baseweb by digital printing inks controlled by the print head controller, laminating the printed side of the baseweb to a semi-rigid polymeric thermoformable backing sheet and removing the temporary carrier to form the digitally printed composite laminate in which the transparent baseweb forms a protective outer layer for the image or pattern printed on the baseweb, and in which the digitally printed composite laminate is thereafter thermoformed or molded to said three-dimensional shape to form a finished shaped automotive laminate with the color-matched digitally printed image or pattern visible through the baseweb.

7. The process according to claim 6 including thermoforming and/or injection molding the composite laminate to form a finished product having a three-dimensional shape in which the printed image or pattern is visible through the protective outer layer, and in which print quality of the decorative pattern on the finished product is substantially comparable to the print pattern prior to the thermoforming step.

8. The process according to claim 6 or 7 including maintaining the baseweb at a temperature in excess of 49°C (120°F) during the printing step.

9. The process according to any one of claims 6 to 8 in which the optically clear polymeric sheet has a 60 degree gloss level in excess of about 50 gloss units on a side opposite the printed pattern or image.

10. The process for making a color-matched thermoformable digitally printed composite laminate according to any one of claims 6 to 9 comprising placing an optically transparent flexible polymeric baseweb in a software-driven digitally controlled ink jet printer having a controller with image-related adjustments for printing a decorative image or pattern in a multiple color format, the ink jet printer controlled to produce a multiple color print pattern that matches an adjustable pre-set desired multiple color print pattern; transporting the baseweb through the ink jet printer for applying a multiple color decorative ink jet image or pattern to the baseweb, the baseweb transported through the printer so the print head applies said image or pattern in digitally controlled multiple ink jet layers and at a digitally controlled print speed in a single pass through the printer for forming a finished image or pattern or the baseweb which has been color-matched to the desired print pattern.

11. The process according to claim 10 comprising producing a software-driven image of a pattern on a screen to represent a standard color print pattern; evaluating and adjusting the standard as displayed on the screen, using software-driven image-related adjustments; producing a test print by applying a decorative pattern to a flexible, thermoformable polymeric sheet using digital ink jet printer-applied digital printing inks; making an optional software-driven image-related adjustment to color match the test print image to the standard, and when the adjusted test print image is acceptable, passing an image-related output to the digital ink jet printer for printing on the baseweb to produce a decorative pattern or image color-matched to the accepted on-screen standard.

12. The process according to claim 1 or 6 in which the digitally printed laminate is thermoformed or molded and passes the GM 9071 ink adhesion test; in which the thermoformed or molded sheet, when tested according to the SAE J1885 Xenon Weatherometer test, substantially retains its original gloss; and in which the thermoformed or molded sheet, when tested according to the ASTM G53 QUV accelerated weather test, substantially retains its original gloss.

13. The process according to claim 1 or 6 in which the digitally printed laminate is thermoformed to a three-dimensional shape, and in which the 60 degree gloss of the laminate before and after thermoforming is in excess of 50 gloss units.

## Patentansprüche

1. Verfahren zum Herstellen eines thermogeformten oder formgepreßten, digital bedruckten Verbundwerkstofflaminates, umfassend
das Tragen einer flexiblen und thermoformbaren, optisch transparenten, polymeren Basis- bzw. Grundbahn auf einem temporären Trägerfilm, wobei die Grundbahn eine Dicke von 12,7 µm bis 76,2 µm (0,5 bis 3 mils) aufweist,
das Anordnen der getragenen Grundbahn in einem Tintenstrahldrucker mit einem Software-gesteuerten, digital gesteuerten Druckkopf mit bildbezogenen Einstellungen zum Drucken eines dekorativen Bildes oder Musters in einem Mehrfach-Farbformat,
das Transportieren der getragenen Grundbahn durch den Tintenstrahldrucker unter der Kontrolle der Druckkopfsteuereinheit zum Aufbringen eines dekorativen Mehrfach-Farbtintenstrahlbildes oder -musters auf der Grundbahn, wobei die Grundbahn derart durch den Drucker transportiert wird, daß der Druckkopf das Bild oder Muster in digital gesteuerten Mehrfach-Tintenstrahlschichten und bei einer digital gesteuerten Druckgeschwindigkeit in einem einzigen Durchgang durch den Drucker aufbringt, wobei das Tintenstrahlbild oder -muster auf die Grundbahn durch digitale Drucktinten, gesteuert durch die Druckkopfsteuereinheit, aufgebracht wird,
das Laminieren der bedruckten Seite der Grundbahn auf eine semisteife, polymere, thermoformbare Verstärkungslage bzw. -platte, und
das Entfernen des temporären Trägers, um das digital bedruckte Verbundwerksfiofflaminat zu bilden, in welchem die transparente Grundbahn eine äu-ßere Schutzschicht für das Bild oder Muster, welches auf die Grundbahn gedruckt ist, bildet, und in welchem das digital bedruckte Verbundwerkstofflaminat danach zu der dreidimensionalen Form thermogeformt oder formgepreßt wird, um ein fertig geformtes Laminat mit dem digital gedruckten Bild oder Muster, welches durch die Grundbahn sichtbar ist, zu bilden.

2. Verfahren nach Anspruch 1, welches das Vorwärmen der Grundbahn und das Halten der Grundbahn bei einer Temperatur von höher als 49°C (120°F) während des Druckschrittes einschließt, wobei die Temperatur ausreichend ist, um die Tintenhaftung im Vergleich zum Drucken bei Raumtemperatur zu verbessern, und welches das Halten der Grundbahntemperatur von höher als 49°C (120°F), gefolgt von dem Druckschritt, einschließt, um die Tinte lösungsmittelzutrocknen.

3. Verfahren nach Anspruch 1 oder 2, in welchem der Drucker die Tintenschichten direkt auf die Oberfläche der Grundbahn in der Abwesenheit einer Tintenempfangsschicht auf der Grundbahn aufbringt.

4. Verfahren nach Anspruch 1 oder 2, in welchem die thermogeformte Grundbahn den GM 9071-Tintenhaftungstest besteht, in welchem die thermogeformte oder formgepreßte Grundbahn, wenn sie gemäß dem SAE J1885-Xenon Verwitterungsmetertest getestet wird, im wesentlichen deren ursprünglichen Glanz beibehält, und in welchem die thermogeformte oder formgepreßte Grundbahn, wenn sie gemäß dem ASTM G53 QUV-beschleunigten Verwitterungstest getestet wird, im wesentlichen deren ursprünglichen Glanz beibehält.

5. Verfahren nach einem der Ansprüche 1 bis 4, in welchem die durch die Grundbahn gebildete äußere Schutzschicht einen 60°-Glanzgrad von höher als etwa 50 Glanzeinheiten aufweist.

6. Verfahren zum Herstellen eines farbangepaßten, thermogeformten oder formgepreßten, digital bedruckten Kraftfahrzeug-Verbundwerkstofflaminats, umfassend
das Tragen einer flexiblen und thermoformbaren, optisch transparenten, polymeren Grundbahn auf einer temporären Trägerfolie, wobei die Grundbahn eine Dicke von 12,7 µm bis 76,2 µm (0,5 bis 3 mils) aufweist,
das Anordnen der getragenen Grundbahn in einem Tintenstrahldrucker mit einem Software-gesteuerten, digital gesteuerten Druckkopf mit bildbezogenen Einstellungen zum Drucken eines dekorativen Bildes oder Musters in einem Mehrfach-Farbformat, welches einen anzupassenden Kraftfahrzeug-Farbstandard darstellt,
das Transportieren der getragenen Grundbahn durch den Tintenstrahldrucker unter der Kontrolle der Druckkopfsteuereinheit zum Aufbringen eines dekorativen Mehrfach-Farbtintenstrahlbildes oder -musters auf die Grundbahn, wobei die Grundbahn derart durch den Drucker transportiert wird, daß der Druckkopf das Bild oder Muster in digital gesteuerten Mehrfach-Tintenstrahlschichten und bei einer digital gesteuerten Druckgeschwindigkeit in einem einzigen Durchgang durch den Drucker aufbringt, wobei das Tintenstrahlbild oder -muster auf die Grundbahn durch digitale Drucktinten, gesteuert durch die Druckkopfsteuereinheit, aufgebracht wird,
das Laminieren der bedruckten Seite der Grundbahn auf eine semisteife, polymere, thermoformbaren Verstärkungslage bzw. -platte, und
das Entfernen des temporären Trägers, um das digital bedruckte Verbundwerkstofflaminat zu bilden, in welchem die transparente Grundbahn eine äu-ßere Schutzschicht für das auf die Grundbahn gedruckte Bild oder Muster bildet, und in welchem das digital bedruckte Verbundwerkstofftaminat danach zu der dreidimensionalen Form thermogeformt oder formgepreßt wird, um ein fertig geformtes Kraftfahrzeug-Laminat mit dem durch die Grundbahn sichtbaren, farbangepaßten, digital gedruckten Bild oder Muster zu bilden.

7. Verfahren nach Anspruch 6, welches das Thermoformen und/oder Spritzgießen des Verbundwerkstofflaminats einschließt, um ein Endprodukt mit einer dreidimensionalen Form zu bilden, in welchem das gedruckte Bild oder Muster durch die äußere Schutzschicht sichtbar ist, und in welchem die Druckqualität des dekorativen Musters auf dem Endprodukt im wesentlichen vergleichbar mit dem Druckmuster vor dem Thermoformschritt ist.

8. Verfahren nach Anspruch 6 oder 7, welches das Halten der Grundbahn bei einer Temperatur von höher als 49°C (120°F) während des Druckschrittes einschließt.

9. Verfahren nach einem der Ansprüche 6 bis 8, in welchem die optisch klare, polymere Lage bzw. Platte einen 60°-Glanzgrad von höher als etwa 50 Glanzeinheiten auf einer dem gedruckten Muster oder Bild entgegengesetzten Seite aufweist.

10. Verfahren zum Herstellen eines farbangepaßten, thermoformbaren, digital bedruckten Verbundwerkstofflaminats nach einem der Ansprüche 6 bis 9, umfassend
das Anordnen einer optisch transparenten, flexiblen, polymeren Grundbahn in einem Software-gesteuerten, digital gesteuerten Tintenstrahldrucker mit einer Steuereinheit mit bildbezogenen Einstellungen zum Drucken eines dekorativen Bildes oder Musters in einem Mehrfach-Farbformat, wobei der Tintenstrahldrucker gesteuert wird, um ein Mehrfach-Farbmuster zu bilden, welches an ein einstellbares, voreingestelltes, gewünschtes Mehrfach-Farbmuster angepaßt ist,
das Transportieren der Grundbahn durch den Tintenstrahldrucker zum Aufbringen eines dekorativen Mehrfach-Farbtintenstrahlbildes oder -musters auf die Grundbahn, wobei die Grundbahn derart durch den Drucker transportiert wird, daß der Druckkopf das Bild oder Muster in digital gesteuerten Mehrfach-Tintenstrahlschichten und bei einer digital gesteuerten Druckgeschwindigkeit in einem einzigen Durchgang durch den Drucker aufbringt, zum Bilden eines Endbildes oder -musters oder der Grundbahn, welche an das gewünschte Druckmuster farbangepaßt worden ist.

11. Verfahren nach Anspruch 10, umfassend
das Herstellen eines Software-gesteuerten Bildes eines Musters auf einem Bildschirm, um ein Standardfarbdruckmuster darzustellen,
das Beurteilen und Einstellen des Standards, wie auf dem Bildschirm angezeigt,
das Verwenden der Software-gesteuerten bildbezogenen Einstellungen,
das Herstellen eines Testdruckes durch Aufbringen eines dekorativen Musters auf eine flexible, thermoformbare, polymere Lage bzw. Platte, unter Verwendung von digitalen Tintenstrahltinten, aufgebracht durch einen digitalen Tintenstrahldrucker,
das Herstellen einer optionalen Software-gesteuerten, bildbezogenen Einstellung, um das Testdruckbild an den Standard farbanzupassen, und,
wenn das eingestellte Testdruckbild annehmbar ist, das Leiten einer bildbezogenen Ausgabe zu dem digitalen Tintenstrahldrucker, zum Drucken auf der Grundbahn, um ein dekoratives Muster oder Bild, farbangepaßt an den angenommenen Standard auf dem Bildschirm, herzustellen.

12. Verfahren nach Anspruch 1 oder 6, in welchem das digital bedruckte Laminat thermogeformt oder formgepreßt wird, und welches den GM 9071-Tintenhaftungstest besteht, in welchem die thermogeformte oder formgepreßte Lage bzw. Platte, wenn diese gemäß dem SAE J1885-Xenon-Verwitterungsmetertest getestet wird, im wesentlichen ihren ursprünglichen Glanz beibehält, und in welchem die thermogeformte oder formgepreßte Lage bzw. Platte, wenn diese gemäß dem ASTM G63 QUV-beschleunigten Verwitterungstest getestet wird, im wesentlichen ihren ursprünglichen Glanz beibehält.

13. Verfahren nach Anspruch 1 oder 6, in welchem das digital bedruckte Laminat zu einer dreidimensionalen Form thermogeformt wird, und in welchem der 60°-Glanz des Laminats vor und nach dem Thermoformen oberhalb von 50 Glanzeinheiten ist.

## Revendications

1. Procédé de préparation d'un stratifié composite numériquement imprimé thermoformé ou moulé comprenant les étapes consistant à supporter une toile de base polymère optiquement transparente flexible et thermoformable sur un film porteur temporaire, la toile de base ayant une épaisseur de 12,7 µm à 76,2 µm (0,5 à 3 mils), placer la toile de base supportée dans une imprimante à jet d'encre comportant une tête d'impression commandée numériquement pilotée par logiciel ayant des ajustements liés à l'image pour imprimer une image ou un motif décoratif dans un format à couleurs multiples, transporter la toile de base supportée à travers l'imprimante à jet d'encre sous la commande de l'unité de commande de tête d'impression pour appliquer une image ou un motif à jet d'encre décoratif à couleurs multiples sur la toile de base, la toile de base étant transportée à travers l'imprimante de sorte que la tête d'impression applique ladite image ou ledit motif en de multiples couches à jet d'encre commandées numériquement et à une vitesse d'impression commandée numériquement en une seule passe à travers l'imprimante, l'image ou le motif à jet d'encre étant appliqué sur la toile de base par des encres d'impression numérique commandées par l'unité de commande de tête d'impression, stratifier le côté imprimé de la toile de base sur une feuille de doublage thermoformable polymère semi-rigide et enlever le porteur temporaire pour former le stratifié composite numériquement imprimé dans lequel la toile de base transparente forme une couche externe protectrice pour l'image ou le motif imprimé sur la toile de base, et dans lequel le stratifié composite numériquement imprimé est ensuite thermoformé ou moulé en ladite forme tridimensionnelle pour former un stratifié formé fini avec l'image ou le motif numériquement imprimé visible à travers la toile de base.

2. Procédé selon la revendication 1, comprenant les étapes consistant à préchauffer la toile de base et maintenir la toile de base à une température en excès de 49° C (120°F) pendant l'étape d'impression, ladite température étant suffisante pour améliorer l'adhérence de l'encre comparée à une impression à température ambiante, et comprenant l'étape consistant à maintenir la température de la toile de base en excès de 49° C (120°F), après l'étape d'impression, pour sécher par solvant l'encre.

3. Procédé selon la revendication 1 ou 2, dans lequel l'imprimante applique les couches d'encre directement à la surface de la toile de base en l'absence d'une couche réceptrice d'encre sur la toile de base.

4. Procédé selon la revendication 1 ou 2, dans lequel la toile de base thermoformée passe l'essai d'adhérence de l'encre de la norme GM 9071, dans lequel la toile de base thermoformée ou moulée, lorsqu'elle est mise à l'essai selon l'essai de résistance aux intempéries de xénon de la norme SAE J1885, conserve sensiblement son brillant d'origine, et dans lequel la toile de base thermoformée ou moulée, lorsqu'elle est mise à l'essai selon l'essai de résistance aux intempéries accéléré de la norme ASTM G53 QUV, conserve sensiblement son brillant d'origine.

5. Procédé selon l'une quelconque des revendications 1 à 4, dans lequel la couche externe protectrice formée par la toile de base a un niveau de brillant à 60 degrés en excès d'environ 50 unités de brillant.

6. Procédé de préparation d'un stratifié composite automatisé imprimé numériquement thermoformé ou moulé accordé en termes de couleurs comprenant les étapes consistant à supporter une toile de base polymère optiquement transparente flexible et thermoformable sur un film porteur temporaire, la toile de base ayant une épaisseur de 12,7 µm à 76,2 µm (0,5 à 3 mils), placer la toile de base supportée dans une imprimante à jet d'encre comportant une tête d'impression commandée numériquement pilotée par logiciel ayant des ajustements liés à l'image pour imprimer une image ou un motif décoratif dans un format à couleurs multiples représentant une norme de couleurs automatisée à accorder, transporter la toile de base supportée à travers l'imprimante à jet d'encre sous la commande de l'unité de commande de tête d'impression pour appliquer une image ou un motif à jet d'encre décoratif à couleurs multiples à la toile de base, la toile de base étant transportée à travers l'imprimante de sorte que la tête d'impression applique ladite image ou ledit motif en de multiples couches à jet d'encre commandées numériquement et à une vitesse d'impression commandée numériquement en une seule passe à travers l'imprimante, l'image ou le motif à jet d'encre étant appliqué à la toile de base par des encres d'impression numérique commandées par l'unité de commande de tête d'impression, stratifier le côté imprimé de la toile de base à une feuille de doublage thermoformable polymère semi-rigide et enlever le porteur temporaire pour former le stratifié composite numériquement imprimé dans lequel la toile de base transparente forme une couche externe protectrice pour l'image ou le motif imprimé sur la toile de base, et dans lequel le stratifié composite numériquement imprimé est ensuite thermoformé ou moulé à ladite forme tridimensionnelle pour former un stratifié automatisé formé fini avec l'image ou le motif numériquement imprimé accordé en termes de couleurs visible à travers la toile de base.

7. Procédé selon la revendication 6, comprenant l'étape consistant à thermoformer et/ou mouler par injection le stratifié composite pour former un produit fini ayant une forme tridimensionnelle dans laquelle l'image ou le motif imprimé est visible à travers la couche externe protectrice, et dans lequel la qualité d'impression du motif décoratif sur le produit fini est sensiblement comparable au motif d'impression avant l'étape de thermoformage.

8. Procédé selon la revendication 6 ou 7, comprenant l'étape consistant à maintenir la toile de base à une température en excès de 49° C (120°F) pendant l'étape d'impression.

9. Procédé selon l'une quelconque des revendications 6 à 8, dans lequel la feuille polymère optiquement claire a un niveau de brillant à 60 degrés en excès d'environ 50 unités de brillant sur un côté opposé à l'image ou au motif imprimé.

10. Procédé de préparation d'un stratifié composite numériquement imprimé thermoformable accordé en termes de couleurs selon l'une quelconque des revendications 6 à 9, comprenant les étapes consistant à placer une toile de base polymère flexible optiquement transparente dans une imprimante à jet d'encre commandée numériquement pilotée par logiciel comportant une unité de commande avec des ajustements liés à l'image pour imprimer une image ou un motif décoratif dans un format à couleurs multiples, l'imprimante à jet d'encre étant commandée pour produire un motif d'impression à couleurs multiples qui s'accorde à un motif d'impression à couleurs multiples souhaité pré-établi ajustable; transporter la toile de base à travers l'imprimante à jet d'encre pour appliquer une image ou un motif à jet d'encre décoratif à couleurs multiples à la toile de base, la toile de base étant transportée à travers l'imprimante de sorte que la tête d'impression applique ladite image ou ledit motif en de multiples couches à jet d'encre commandée numériquement et à une vitesse d'impression commandées numériquement en une seule passe à travers l'imprimante pour former une image ou un motif fini sur la toile de base qui a été accordé en termes de couleurs au motif d'impression souhaité.

11. Procédé selon la revendication 10, comprenant les étapes consistant à produire une image pilotée par logiciel d'un motif sur un écran pour représenter un motif d'impression couleur normalisé ; évaluer et ajuster la norme telle qu'affichée sur l'écran, en utilisant des ajustements liés à l'image pilotés par logiciel ; produire une impression d'essai en appliquant un motif décoratif à une feuille polymère thermoformable flexible utilisant des encres d'impression numérique appliquées par imprimante à jet d'encre numérique ; effectuer un ajustement facultatif lié à l'image pilotée par logiciel pour accorder l'image d'impression d'essai à la norme en termes de couleurs, et lorsque l'image d'impression d'essai ajustée est acceptable, faire passer une sortie liée à l'image vers l'imprimante à jet d'encre numérique pour impression sur la toile de base afin de produire une image ou un motif décoratif accordé en termes de couleurs à la norme à l'écran acceptée.

12. Procédé selon la revendication 1 ou 6, dans lequel le stratifié numériquement imprimé est thermoformé ou moulé et passe l'essai d'adhérence de l'encre de la norme GM 9071 ; dans lequel la feuille thermoformée ou moulée, lorsqu'elle est mise à l'essai selon l'essai de résistance aux intempéries de xénon de la norme SAE J1885, conserve sensiblement son brillant d'origine ; et dans lequel la feuille thermoformée ou moulée, lorsqu'elle est mise à l'essai selon l'essai de résistance aux intempéries accéléré de la norme ASTM G53 QUV, conserve sensiblement son brillant d'origine.

13. Procédé selon la revendication 1 ou 6, dans lequel le stratifié numériquement imprimé est thermoformé en une forme tridimensionnelle, et dans lequel le brillant à 60 degrés du stratifié avant et après thermoformage est en excès de 50 unités de brillant.
